# EUROPEAN PATENT APPLICATION

(11) **EP 1 464 776 A2**
(43) Date of publication of application: **06.10.2004**
(21) Application number: 04380047.3
(22) Date of filing: 05.03.2004
(51) Int. Cl.: E04G 21/08

(54) **Vibrating device for compacting concrete**

(30) Priority: 02.04.2003 ES 200300775
(71) Applicant: Industrias Techno-Flex, S.A., 08028 Barcelona (ES)
(72) Inventor: Oliveras Pique, Valentin, 08191 Rubi (ES)
(74) Representative: SUGRANES - VERDONCES - FERREGÜELA

(57) **Abstract**

The device (1) comprises a plug (2) for the connection of the device to an electrical power supply; a control unit (3) provided with control means, a single-phase voltage to three-phase voltage converter and a frequency shifter; an electrical wire (4) which connects the connecting plug (2) with the control unit (3); a vibrating head (5); and electrical wires which connect the control unit with the vibrating head, the control means comprising activation means (14) of the vibrating head (5) and deactivation means (15) thereof, activated independently from one another and adapted electrically to avoid the uncontrolled setting in motion of the vibrating head (5), stemming from anomalies in the electrical supply to the device (1).

## Description

### Technical field of the invention

The object of the invention is a vibrating device for compacting concrete, of the kind habitually used for the *in situ* compacting of concrete.

### Background of the invention

Many embodiments of vibrating devices for the *in situ* compacting of concrete are known. Essentially, such vibrating devices comprise means to connect the device to a single-phase power supply; a frequency shifter, which converts single-phase voltage into three-phase voltage, at a greater frequency than that of the power supply; operational control means; a vibrating head; and wires for making the corresponding electrical connections between elements.

The embodiments of vibrating devices known by the inventor deal with, among other aspects, arrangements of the aforementioned elements to one another, in order to obtain, *in situ,* conditions of use which are adapted to the working environment as well as the people entrusted with the work.

The patent document ES 2 086 851, discloses a vibrating device to compact concrete, wherein a converter (2b) is combined with a switch (2a) to form an assembly unit (6), the switch (2a) being activated by the operator by means of an activating element (2a').

The patent document P 9901314, by the same applicant, discloses a vibrating device wherein a frequency shifter unit (4), which converts single-phase voltage into three-phase, and a control unit (3), are arranged independently from one another, the switch (14) of the control unit being activated by means of manual operating means (16) and/or through remote operating means (17, 24) by radiofrequency signals and/or infrared rays.

The embodiments of vibrating devices known by the inventor incorporate a switch for starting and stopping the electric motor vibrating head, the switch being activated by a single activation element, arranged on the surface of the device control unit and generally of the type which tilts between two fixed positions corresponding to the operational states of the electric motor.

Such an arrangement of the activation element wherein it is used for performing two distinct functions, these being, the activation and deactivation of the electric motor vibrating head, can give rise to misleading situations, such as those which can occur, for example, by concealment of the graphic instructions for activating and deactivating arranged on the control unit, due to building material deposits or dirt.

Furthermore, this arrangement of the activation element with two fixed positions for the activation and deactivation of the electric motor vibrating head presents a safety problem which lies in the fact that when the vibrating head is operating and the electrical supply to the device is cut, if, in these conditions, the operator does not modify the position of the activation element by placing it in the deactivation position, when there is a resumption of the electrical supply, the activation of the vibrating head occurs simultaneously, which can give rise to difficult situations.

### Explanation of the invention

The vibrating device for compacting concrete object of the invention comprises a plug adapted to connect the device to an electrical power supply; a control unit provided with control means, a single-phase voltage to three-phase voltage converter and a frequency shifter; an electrical wire which connects the connecting plug with the control unit; a vibrating head; and electrical wires arranged inside a tubular and flexible common protective cover, which connects the control unit with the vibrating head.

The vibrating device of the invention is characterised in that the control means of the control unit comprise activation means of the vibrating head and deactivation means thereof, activated independently from one another and close to one another, and adapted electrically so that, when the vibrating head is active and the electrical supply to the device is stopped, the reactivation of the vibrating head on resumption of the electrical supply requires the activating of the activation means, all of which acts as a safety element and thus prevents the unwanted setting in motion of the device.

Another characteristic of the invention consists of the activation means of the vibrating head and the deactivation means thereof comprising a respective button with automatic return to the rest position.

In accordance with another characteristic of the invention, the activation means of the vibrating head and the deactivation means thereof are provided with corresponding optical signalling means.

The aforementioned characteristics of the vibrating device for compacting concrete object of the invention provide an innovative ergonomic and safe solution to the problems stemming from the handling of vibrating devices. In fact, the characteristic arrangement in the control unit of an activation element and of a deactivation element of the vibrating head electric motor, which are activated independently from one another, provide a solution to the drawbacks described which the known embodiments of vibrating heads present, since having two elements activated independently from one another allows the operator a clear selection of the control option to be chosen, activation or deactivation of the vibrating head electric motor, whose selection is reinforced by means of a clear identification of the activation elements, such as the use of suitable colours, for example, the colour green indicating the electric motor is ready to start and the colour red, indicating the electric motor is operating.

Also, the fact that the activation means and the deactivation means of the vibrating head are electrically adapted in such a way that, when the vibrating head is activated and the electrical supply to the vibrating device is cut, the resumption of the electrical supply does not result in the uncontrolled activation of the vibrating head, as occurs with the known embodiments of vibrating devices, but for the activation of the vibrating head the activating of the activation means is required, thus avoiding difficult situations.

### Brief description of the drawings

A vibrating device for compacting concrete in accordance with the invention is illustrated in the attached drawings, by way of non-limiting example. In said drawings:
Fig. 1, is a view of the vibrating device for compacting concrete in accordance with the invention; and
Fig. 2, is an enlarged view of the control unit of the vibrating device of the invention shown in Fig. 1.

### Detailed description of the drawings

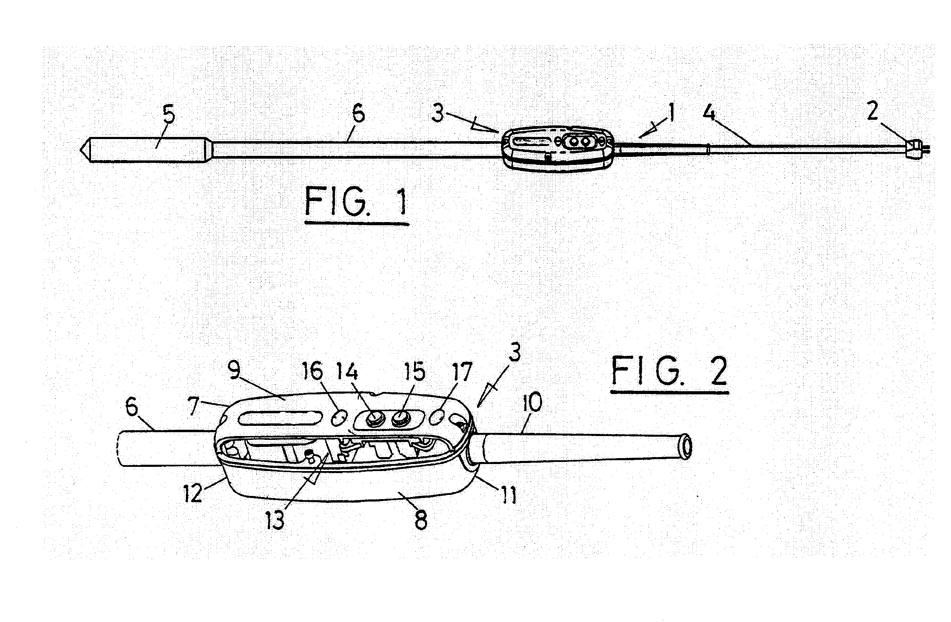

In Fig. 1, it can be appreciated that the vibrating device 1 for compacting concrete in accordance with the invention which is herein described as an embodiment, comprises a plug 2, for the connection of the device 1 to a single-phase electrical power supply which has not been shown; a control unit 3; a wire 4 which connects the plug 2 to the control unit 3; a vibrating head 5; and electrical wires, not represented and arranged inside a common protective cover 6, which connects the control unit 3 to the vibrating head 5.

In Fig. 2 it can be appreciated that the control unit 3 comprises an elongated box 7 capable of being held by the user and which comprises a body 8 and a removable cover 9. One of the ends of the body 8, or input end 11, is provided with a sleeve 10 adapted for the electrical wire 4 to go inside it, thus securing it, whereas the other end of the body 8, or output end 12, is provided with means, not represented, adapted for fixing the corresponding end of the protective cover 6, through which the electrical feed wires of the vibrating head 5 pass. Arranged inside the control unit 3 is an electrical circuit which essentially comprises a single-phase to three-phase voltage converter, a frequency shifter and an opening and closing element of the feed to the vibrating head 5, this set of elements being indicated by the numerical reference 13.

The cover 9 of the box 8 of the control unit 3 is provided with activation means 14 of the vibrating head 5 and deactivation means 15 of said head 5, which are activated independently from one another and which act on said opening and closing element of the feed to the vibrating head 5, said activation means 14 and deactivation means 15 are situated on the longitudinal axis of the box 7 and arranged close to one another. Preferably, the activation means 14 and the deactivation means 15 comprise a respective button with automatic return to the rest position; in addition, and also on the longitudinal axis of the box 8, arranged close to the activation means 14, there is an optical activation signal 16, consisting, for example, of a green-coloured circular figure, and arranged close to the deactivation means 15 there is an optical deactivation signal 17, consisting of a red-coloured circular figure. Such optical signalling elements can adopt another suitable visual configuration, so, for example, the optical activation signal 16 can consist of the symbol « I », whereas the optical deactivation signal 17 can consist of the symbol « O ». Other forms of optical signalling are also possible, such as, for example, luminous signals which may be arranged close to the activation means 14 and deactivation means 15 of the vibrating head 5, or said luminous signals may be incorporated by the activation and deactivation means.

As indicated above, the activation means 14 and the deactivation means 15 preferably comprise a respective button with automatic return to the rest position; it is also preferable that the activation means 14 button is provided with a contact which is normally open, whereas the deactivation means 15 button is provided with a contact which is normally closed. This arrangement of buttons and contacts permits, for example, the connection series of the normally open contact of the activation means 14 button with the normally closed contact of the deactivation means 15 button and with the opening and closing element of the feed to the vibrating head 5, in this last case and more specifically in series with the activator, for example, of an electromagnetic type, of the opening and closing element, arranging itself in parallel connection with the normally open contact of the activation means 14 button a normally open feedback contact and functionally linked to said activator of the opening and closing element, that is, said feedback contact passes to closed position when the opening and closing element of the feed to the vibrating head 5 is activated and passes to open position when the former is deactivated.

From the aforementioned and in normal conditions of use, in order to activate the vibrating head 5, the activation means 14 button just needs to be pressed, whereas in order to deactivate the vibrating head 5 the deactivation means 15 button needs to be pressed. Should the vibrating head 5 be activated and a cut in the supply of electrical energy to the vibrating device 1 occur, the deactivation of the opening and closing element of the vibrating head 5 takes place at the same time, the feedback contact remaining in open position; in these conditions, when the electrical supply to the vibrating device 1 is resumed, the activation means 14 button needs to be pressed in order to activate the vibrating head 5, thus avoiding the uncontrolled activation of the vibrating head 5.

## Claims

1. Vibrating device (1) for compacting concrete, which comprises a plug (2) adapted for the connection of the device to an electrical power supply; a control unit (3) provided with control means, a single-phase voltage to three-phase voltage converter and a frequency shifter; an electrical wire (4) which connects the plug (2) with the control unit (3); a vibrating head (5); and electrical wires arranged inside a tubular and flexible common protective cover (6), which connects the control unit (3) with the vibrating head (5), which is **characterised in that** the control means of the control unit (3) comprise activation means (14) of the vibrating head (5) and deactivation means (15) thereof, activated independently from one another and close to one another, and adapted electrically so that, when the vibrating head (5) is active and the electrical supply to the device (1) is stopped, the reactivation of the vibrating head (5) on resumption of the electrical supply to the device (1), requires the activating of the activation means (14), all of which acts as a safety element and thus prevents the unwanted setting in motion of the device.

2. Vibrating device according to claim 1, **characterised in that** the activation means (14) of the vibrating head (5) and the deactivation means (15) thereof comprise a respective button with automatic return to the rest position.

3. Vibrating device according to claims 1 or 2, **characterised in that** the activation means (14) of the vibrating head (5) and the deactivation means (15) thereof are provided with corresponding optical signalling means (16, 17).
